# EUROPEAN PATENT APPLICATION

(11) **EP 0 975 181 A2**
(43) Date of publication of application: **26.01.2000**
(21) Application number: 99305322.2
(22) Date of filing: 05.07.1999
(51) Int. Cl.: H04Q 3/62, H04Q 11/04

(54) **Distributed PBX/Centrex and POTS service over ATM/XDSL**

(30) Priority: 07.07.1998 US 110463
(71) Applicant: Nortel Networks Corporation, Montreal, Quebec H2Y 3Y4 (CA)
(72) Inventor: Doczy, Daniel J., Raleigh, NC 27615 (US); Getchell, Wayne, Mepean(ario) K2G 0J8 (CA); Knee, Gary, Nepean(ario) K2J 3K1 (CA); Wingtove, Michael J., Kanata(ario) K2M 2M9 (CA)
(74) Representative: Berkson, Michael David

(57) **Abstract**

The present invention relates to telecommunication systems that facilitate distributed access to voice and data communications (in particular PBX/Centrex and POTS services). A gateway (86) is connected to a PBX or Centrex switch (84) which puts speech and call control signals originating from the PBX or Centrex switch into Asynchronous Transfer Mode (ATM) cells and sends them to an ATM network (64). The ATM network transports the cells to a Digital Subscriber Loop Access Multiplexer (DSLAM)(66). The DSLAM provides an interface between the ATM network and a Digital Subscriber Loop (DSL) channel (68) connected to the customer premises (73). A Customer Premises Equipment (CPE)(70) reconstitutes the speech and call control signals and sends them to a telephone set (80) and/or computer device (82) attached thereto. Since the speech samples and call control signals originate with the customer's PBX or Centrex switch, the telecommuter and/or small branch office can use the same telephone set, same dial plan, same call features and same low-cost long-distance calling plan as colleagues back at the head office.

## Description

### Field of the Invention

The present invention relates to telecommunication systems, and in particular to telecommunication systems that facilitate distributed access to voice and data communications.

### Background of the Invention

Advancements in telecommunication technology (such as computers, cellular phones, modems, fax and advanced communications links such as xDSL) have removed the physical barriers that obliged workers to maintain a physical presence at their workplace. Due to the popularity and economies realized by telecommuting, it is estimated that by the year 2000, there will be 10 million telecommuters in the United States.

Studies have shown that it is the overwhelming desire of telecommuters (and their employers) to have the same corporate data and voice environment at the telecommuter site. With respect to data, this means Local Area Network (LAN) attached Personal Computers (PC) with high-speed access to the corporate network. The telecommuter should be able to access all the information available on the corporate network, and add information back to the network, all at the same speed as colleagues working in the corporate office. With respect to voice, this means the provision of Private Business Exchange (also known as Private Branch Exchange) (PBX) or Centrex service at the telecommuter site which would provide the same telephone unit, dial plan, call features, voice mail, voice mail indication and corporate long distance rates to the telecommuter or small branch office.

A PBX is typically owned and operated by a private enterprise. It enables end-users in the enterprise to telephone each other by dialling extension numbers (telephone numbers made up of two, three or four digits), instead of the full seven or ten digit telephone number normally associated with a called station (known as National Numbering Plan (NANP) format). Other PBX services include call transfer, call forwarding, voice mail, voice mail indication, conference calling, and speed calling.

Centrex service typically provides end-users within a business group business services similar to those of a Private Business Exchange (PBX) without requiring the enterprise to purchase and maintain a PBX.

The geographical coverage of PBX/Centrex services is generally limited to short distances between the telephone sets attached to either the PBX or the telephone carrier's central office (where the Centrex service is typically located).

PBX and Centrex services can be made more distributed by networking a number of switches together. For example, a distributed Centrex service using the Advanced Intelligent Network (AIN) was described in U.S. patent no. 5,247,571, which issued on September 21, 1993 to Kay et al. In that patent, Centrex services were migrated from local central office switches to a central database stored in a Service Control Point (SCP). By the use of AIN triggers, requests for Centrex data can be sent to the central database to obtain call processing data associated with the business group for a selected Centrex service. Similar distributed Centrex solutions are described in U.S. Patent No. 5,422,941, which issued on June 6, 1995 to Hasenauer et al., and U.S. Patent No. 5,539,817, which issued on July 23, 1996 to Wilkes.

In U.S. Patent No. 5,729,598, which issued on March 17, 1998 to Kay, there is described a system that enables work at home employees to place business calls from their residence telephones with automatic billing of such calls to their employer. As with other patents in the prior art, Centrex data is stored in the public switched telephone network having AIN capabilities and intelligent peripherals for administering the requisite Centrex services. One example of commercially available product to enable more distributed PBX/Centrex service is Nortel's Multilocation Business Group.

Nevertheless, distributing PBX/Centrex over a number of switches still has limitations, including: (1) the geographical coverage is still limited to telephones attached to relatively few networked switches, and (2) a PBX-specific or proprietary telephone is not supported on a Centrex switch and vice versa.

The prior art teaches a number of ways to implement distributed PBX/Centrex services to remote locations for use by a telecommuter or small branch office. For example, a telecommuter may be connected to an Integrated Services Digital Networks (ISDN) Basic Rate Interface (BRI) channel. ISDN BRI specifies an ISDN line that has two 64 kbit/s data and voice (B) channels, and one 16 kbit/s signalling (D) channel. Typically, such telecommuters will connect their PCs behind ISDN Small-Office Home-Office (SOHO) routers, with an Ethernet port and RJ-11 phone jacks to connect their telephone and/or fax machine. Note that with this solution, the telecommuter typically gets his/her residential telephone service provided by a Local Exchange Carrier (LEC), not the Centrex or PBX service of the telecommuter's company. Such a service can be provided with expensive digital extenders.

An example of an ISDN telecommuting solution is the Nortel's Meridian™ Home Office. A similar solution is provided by MCK Communications. A switch module located at the PBX and a remote module located at the off-premises location are used to provide an off-premises employee with voice and data communications functionality. In essence, the speech and call control signals sent on the loop are compressed and sent over an ISDN connection (POTS connectivity is also possible). At the remote end, the loop signal is reconstituted and sent to a telephone set or LAN. The reach of PBX/Centrex service is therefore extended as far as the ISDN connection can reach.

As described above, the ISDN telecommuting setup without expensive digital extenders has other disadvantages in that the voice features behind ISDN SOHO routers are inadequate and different from the PBX/Centrex phone located in the corporate office. As well, the data performance on ISDN BRI is inadequate compared to the corporate LAN. It is estimated that 25% of telecommuters desire higher speed data access than is provided by ISDN BRI.

To enhance the speed of data access to subscribers, Digital Subscriber Line (DSL) technologies are being developed to permit wideband transmissions over existing twisted-pair copper wiring already in place in the local loop. DSL technologies allow carriers to offer high-rate services economically and efficiently. A DSL connection uses a DSL interface device on the customer premises and a DSL interface multiplexing device called a DSL Access Multiplexer, or DSLAM between the data network and the CPE.

There are different types of DSL technologies, including Asymmetric DSL (ADSL), which uses a single copper pair and allows a telephone line to handle high-speed data such as VCR-quality video transmissions, Rate-Adaptive DSL (RADSL), which is another version of ADSL which provides more control over different speeds and degree of symmetry required for different applications, and very high data-rate DSL (VDSL), which transports digital signals at speeds ranging between 25 Mbps and 52 Mbps over distances of a few thousand feet. The generic term applied to each of these technologies is xDSL.

There is also a need for Competitive Local Exchange Carriers (CLEC) to provide residential Plain Old Telephone Service (POTS) to telephone subscribers. With the passage of the Telecommunications Act ("the Act") of 1996, the United States telecommunications industry is in a state of radical change. Among other things, the Act requires that Incumbent Local Exchange Carriers (ILEC), the regulated entity that owns and administers an existing access network provide to any requesting telecommunications carrier (hereinafter referred to as "Competing Local Exchange Carriers" (CLEC)) nondiscriminatory access to network elements on an unbundled basis to allow CLECs to combine such network elements in order to provide telecommunications service. As well, ILECs have a duty to provide to CLECs interconnection with their network for the transmission and routing of telephone exchange service and exchange access. The interconnection contemplated by the Act provides nondiscriminatory access or interconnection to such services or information as are necessary to allow the requesting CLEC to implement local dialling parity, including nondiscriminatory access to telephone numbers, operator service, directory assistance, and directory listing, with no unreasonable dialling delays. The provisions of the Act have demonstrated a need for competing exchange carriers to be interconnected so that customers can seamlessly receive calls that originate on another carrier's network and place calls that terminate on another's carrier's network without performing additional activities, such as dialling extra digits, etc.

Accordingly, a need exists to provide a means of distributing PBX/Centrex and POTS services to remote locations.

### Summary of the Invention

It is therefore an object of the present invention to provide a cost-effective and efficient means of distributing PBX/Centrex services to a remote location for use by a telecommuter or small branch office.

It is a further object of the present invention to provide a means of distributing PBX/Centrex services to a remote location that makes use of high speed Digital Subscriber Loop (DSL) technologies.

It is yet a further object of the present invention to provide a means of providing residential Plain Old Telephone Service (POTS) to telephone subscribers.

In accordance with an aspect of the present invention there is provided a system for forwarding, from a first location to a telecommunications device at a second location, a line side signal containing speech and call control signals necessary for providing a telecommunications service at said first location. The system comprises a gateway operable to convert the line side signal received from the first location into a formatted telecommunications signal of predetermined data format and transmit the formatted telecommunications signal over a data network. The system also comprises a remote device at the second location operable to receive the formatted telecommunications signal from the data network, recover the speech and call control signals contained therein and, using said speech and control signals, provide the telecommunications service to the telecommunications device.

In accordance with another aspect of the present invention there is provided a gateway for formatting a telecommunication signal into a predetermined data format. The gateway comprises at least one telephone switch interface card for converting a line side signal received from a telephone switch necessary for implementing a telecommunications service at said telephone switch into a formatted telecommunications signal of predetermined data format, and at least one data network interface card connected to said at least one telephone switch interface card for transmitting said formatted telecommunications signal of predetermined data format to a data network.

In accordance with a further aspect of the present invention there is provided a remote device for receiving and recovering speech and call control signals from a formatting telecommunications signal. The remote device comprises a modem for receiving from a data network a formatted telecommunications signal of predetermined format containing speech and call control signals, a processor connected to said modem for recovering said speech and call control signals from said formatted telecommunications signal and for utilizing said speech and call control signals to implement said telecommunications service on a telecommunications device connected thereto.

In accordance with yet a further aspect of the present invention there is provided a method for distributing a line side signal containing speech and call control signals necessary for providing a telecommunications service at a first location to a telecommunications device at a second location. The method comprises the steps of converting the line side signal received from the first location into a formatted telecommunications signal of predetermined data format; transmitting the formatted telecommunications signal over a data network; receiving the formatted telecommunications signal from the data network; recovering the speech and call control signals contained therein; and, providing the telecommunications service to the telecommunications device.

The present invention provides a means of distributing PBX/Centrex services to a remote location for use by a telecommuter or small branch office. At one end is the customer's PBX or the carrier's central office switch that provides Centrex type services. However, the geographical coverage of PBX/Centrex services to a user's telephone set is typically limited to short distances.

The present invention may also be used by Competitive Local Exchange Carriers (CLEC) to provide residential Plain Old Telephone Service (POTS) to telephone subscribers.

A gateway is connected to the customer's PBX or the carrier's central office switch. The gateway puts speech and call control signals necessary for implementing a telecommunications service, such as PBX/Centrex, from the PBX or Centrex switch into data packets such as Asynchronous Transfer Mode (ATM) cells and sends them to a data network such as an ATM network. The data network transports the data packets an unlimited distance to a Digital Subscriber Loop Access Multiplexer (DSLAM) to which the telecommuter's or small branch office's copper access loop is attached. A DSLAM can either be implemented as a standalone device, or an embedded function within some telephony or transmission equipment. Persons skilled in the art will appreciate that while reference is made to ATM in the above description, other transportation mechanisms, such as frame relay networks, IP networks, etc. can also be used.

The access loop (which could be based on Digital Subscriber Line technology) connects the DSLAM to a remote located at the telecommuter or small branch office site. The remote, also known as Customer Premises Equipment (CPE) or ADSL Transmission Unit-Remote (ATU-R), receives the data packets and reconstitutes the speech and call control signals contained therein. The speech and call control signals are then sent to at least one voice device, such as a telephone set or fax machine, connected thereto.

The aforementioned architecture extends the reach of PBX/Centrex services beyond the normal local loop reach offered by typically located PBX or Centrex switches. Since the speech samples and call control signals originate with the customer's PBX or the carrier's central office switch that provides Centrex type services, the telecommuter and/or small branch office can use the same telephone set, same dial plan, same call features and same low-cost long-distance calling plan as colleagues back at the head office.

### Brief Description of the Drawings

Preferred embodiments of the invention will now be described with reference to the attached drawings in which:
Figure 1 is a schematic diagram of a prior art network illustrating an ISDN telecommuting solution;
Figure 2 is a schematic diagram of a prior art network for distributing high-speed data from a corporate data network to a telecommuter or small branch office;
Figure 3A is a schematic diagram of a network for distributing PBX/Centrex services to a telecommuter or small branch office;
Figure 3B is a schematic diagram of three alternative arrangements for the PBX/Centrex switch and gateway shown in Figure 3;
Figure 4 is a schematic diagram of a combination network for distributing data and PBX/Centrex services from a corporate network to a telecommuter or small branch office;
Figure 5A is a schematic diagram of a home office wired in accordance with the present invention;
Figure 5B is a schematic diagram of a standard xDSL channel;
Figure 6 is a schematic diagram of a gateway used in accordance with the present invention;
Figure 7A is a schematic diagram of a Customer Premises Equipment (CPE) device typically co-located at a telecommuter premises or small branch office; and
Figure 7B is a schematic diagram of a Customer Premises Equipment (CPE) device that is less integrated than the implementation shown in Figure 7A.

### Detailed Description

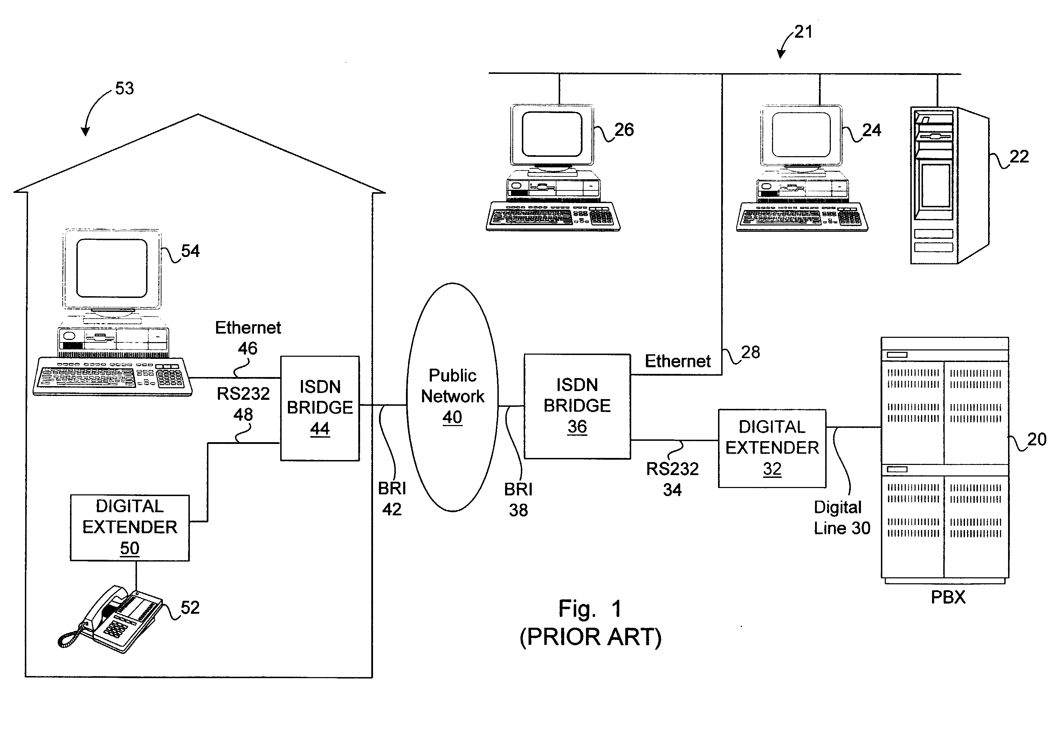

Figure 1 is a schematic diagram of a prior art network illustrating an ISDN telecommuting solution. A PBX 20 located at corporate headquarters offers users connected thereto (not shown) PBX features such as dial plan, call transfer, call forwarding, voice mail, voice mail indication, conference calling, and speed calling. A corporate data network 21 is also located at corporate headquarters comprising server 22, and computers 24, 26. Of course, the corporate data network 21 as shown is for illustration purposes only, in that such a network would normally comprise a greater quantity of computers, servers, etc. Nevertheless, the combination of voice elements (such as PBX 20), and data elements (such as server 22, and computers 24, 26) is typical of most corporate computing environments.

The purpose of the telecommuting solution illustrated in Figure 1 is to distribute PBX services offered by PBX 20 and corporate data offered by corporate data network 21 to telecommuter premises 53 having digital telephone set 52 (for reception of PBX services) and computer 54 (for reception of corporate data). The telecommuting solution is provided with the provision of a digital extender 32 co-located with PBX 20, and a digital extender 50 co-located at telecommuter site 53 which are both used to provide an off-premises employee with voice and data communications functionality. In essence, the speech and call control signals sent on the digital loop 30 from the PBX 20 are received and compressed by the digital extender 32, and then sent over to the ISDN bridge 36 via the RS232 serial link 34. ISDN bridge 36 sends the information over to the remote ISDN bridge 44, using an ISDN B-channel through ISDN BRI 38, public network 40 and ISDN BRI 42. The ISDN bridge 44 forwards the information via RS232 serial link 48 to the digital extender 50, which reconstitutes the original speech and control loop signals and sends them to the attached digital phone 52.

In normal operation for local corporate users, a line card signal (containing speech and call control signals necessary for implementing a telecommunications service, such as PBX/Centrex, at PBX switch 20) is received by a line card contained within PBX switch 20. The line card converts the line card signal to a loop signal, which is sent to the telephone directly attached to the PBX/Centrex switch 20. With the use of the telecommuting solution illustrated in Figure 1, the loop signal is remoted from PBX switch 20 to telecommuter premises 53.

In detail, the telecommuting solution illustrated in Figure 1 is as follows. A digital line 30 connects PBX 20 to switch-side digital extender 32. Switch-side digital extender 32, located on-site with PBX 20, emulates a telephone set to PBX 20. PBX signalling received from, or destined to PBX 20 passes through digital extender 32 which compresses/decompresses the signals and converts from loop signal format to RS232 signal format and vice versa. An RS232 line 34 connects switch-side digital extender 32 to an ISDN bridge 36. An Ethernet connection 28 is used to connect corporate data network 21 to ISDN bridge 36. ISDN bridge 36 uses one B-channel to carry data, and another to carry voice.

An ISDN BRI loop 38 is used to carry the information to public network 40. At the remote end, ISDN BRI loop 42 carries information in the two B channels to ISDN bridge 44, typically co-located at the telecommuter premises 53. ISDN bridge 44 splits the voice signal in one B channel from the data signal in another B channel, transmitting the former to RS232 line 48, and the latter to Ethernet line 46. Remote-side digital extender 50 reconstitutes the loop signals and sends them to telephone 52.

With the use of the telecommuting solution illustrated in Figure 1, telecommuter premises 53 can access the corporate data network 21 and PBX services offered by PBX 20. However, telecommuter premises 53 requires special ISDN connections to take advantage of the illustrated telecommuting solution. As well, the bandwidth offered by the ISDN BRI connection is insufficient to meet the needs of most telecommuters.

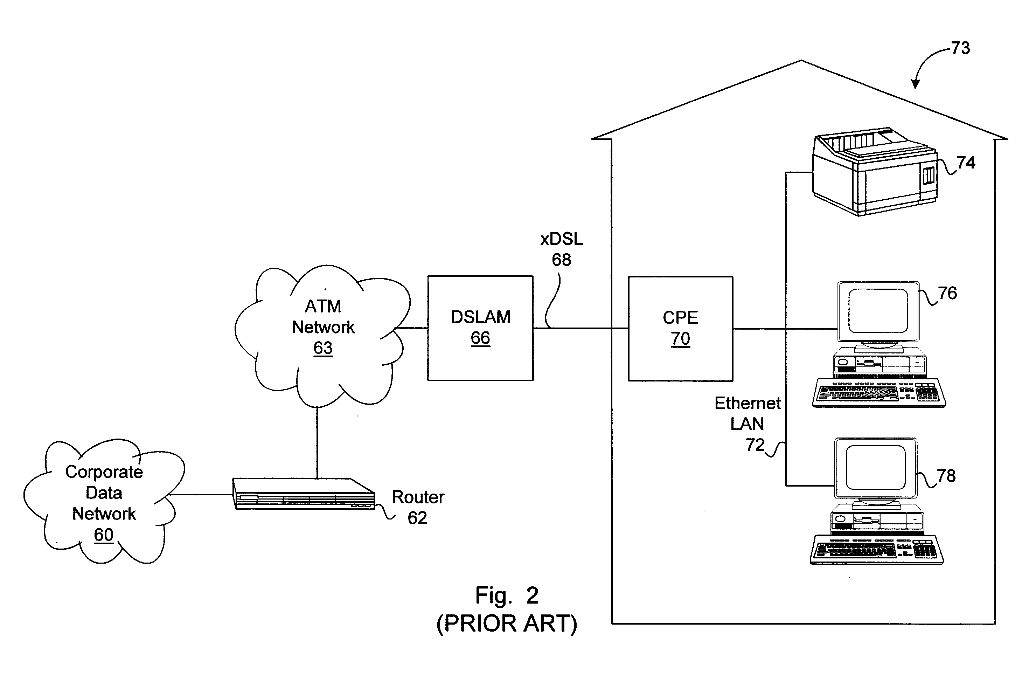

As such, telecommuting solutions have been developed to take advantage of Digital Subscriber Line (DSL) technologies that permit wideband transmissions over existing twisted-pair copper wiring already in place in the local loop. Figure 2 is a schematic diagram of a prior art network for distributing high-speed data (not including voice) from a corporate data network 60 to a telecommuter or small branch office premises 73. Corporate data network 60 would typically comprise many of the same elements of data network 21 shown in Figure 1, namely personal computers, servers, etc. Not shown are these individual elements, which would be interconnected by Ethernet LAN, WAN, etc. Router 62 is used to route data from corporate data network 60 to Asynchronous Transfer Mode (ATM) network 63. ATM network 63 supports multi-media service delivery for many varieties of data traffic. ATM network 63 performs the transportation and switching functions necessary to the implementation of the present invention. Persons skilled in the art will appreciate that ATM network 63 could be replaced by an Internet Protocol (IP) network, or frame relay network.

Digital Subscriber Line Access Multiplexer (DSLAM) 66 is an ATM multiplexer which receives ATM cells from multiple xDSL loops and sends them to the ATM network 63 via one high-speed link. The purpose of DSLAM 66 is to support high-bandwidth applications at the edge of the public network over existing subscriber lines. As shown in Figure 2, DSLAM 66 supports the transmission of high-speed data over the existing twisted-pair copper infrastructure with the use of xDSL transceivers. Data services supported with DSLAM 66 include, but are not limited to, internet access, remote workstation LAN/WAN access, frame relay and native ATM. The cards that populate DSLAM 66 include (not shown): (i) the trunking card which connects DSLAM 66 to ATM network 63; (ii) the ATM fabric which is primarily responsible for switching cells among the different cards in DSLAM 66; (iii) the xDSL line card which provides the subscriber interface; and (iv) a central processing card for shelf control.

XDSL loop 68 (xDSL is used to refer to any DSL protocol, such as ADSL, VDSL, etc.) is shown connecting DSLAM 66 with Customer Premises Equipment 70. XDSL technology uses existing twisted-pair copper plant to offer subscribers broadband services such as high-speed internet access, LAN interconnect for telecommuters, video on-demand, etc. The term "loop" refers to the physical medium, and can comprise one or more channels. Specialized channels or access links such as Hybrid Fibre Coax (HFC), satellite, and wireless would require another access-specific multiplexer to be used in the place of DSLAM 66.

CPE 70 (co-located at telecommuter or small branch office premises 73) performs a similar function to that of an ISDN SOHO router, in that it is designed to receive data packets from xDSL loop 68 and route them to the appropriate computing device connected to Ethernet LAN 72. As shown in Figure 2, a data packet is sent from corporate data network 60 to router 62 where it is segmented into ATM cells for delivery to ATM network 63. The ATM network 63 delivers the cells to DSLAM 66 where the appropriate cells are sent down loop 68. CPE 70 (located at telecommuter or small branch office premises 73) then assembles the original data packet together and delivers the data packet to the appropriate computing device, be it computers 76, 78 or printer 74. The same principles apply in reverse with respect to data transmissions from telecommuter or small branch office premises 73 to corporate data network 60. As such, telecommuter or small branch office premises 73 is provided with an efficient, high speed connection to corporate data network 60.

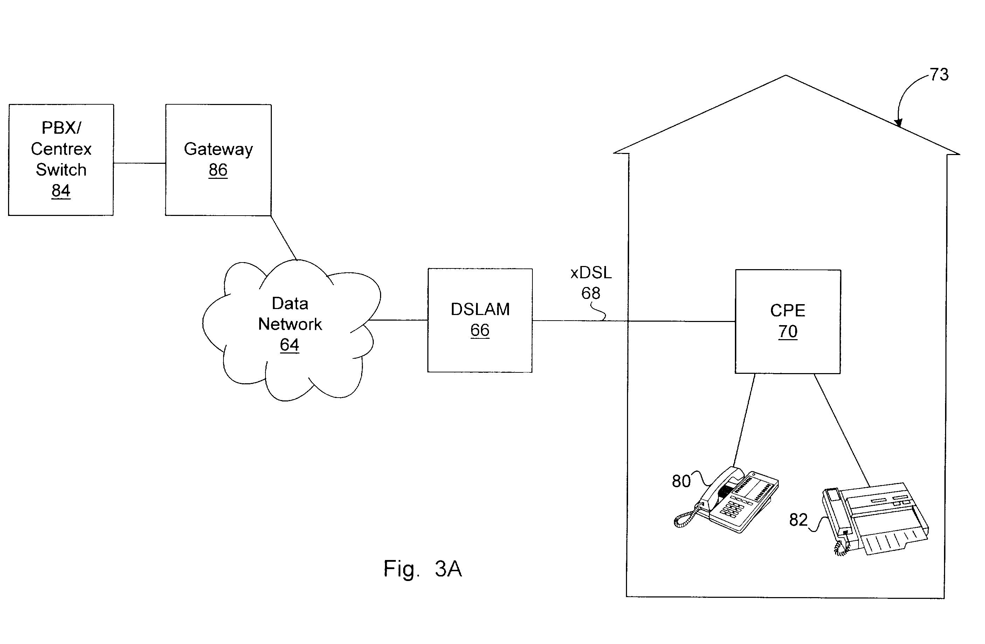

Figure 3A is a schematic diagram of a network for distributing PBX/Centrex services from PBX/Centrex switch 84 to a telecommuter or small branch office premises 73 in accordance with one aspect of the present invention. This network consists of gateway 86 connected between PBX/Centrex switch 84 and data network 64 and DSLAM 66 connected to data network 64 and to CPE 70 co-located at telecommuter or small branch office premises 73 through xDSL channel 68. Voice device 80 such as a digital or analog telephone, and fax machine 82, also co-located at telecommuter or small branch office premises 73, are connected to CPE 70.

In one embodiment of the present invention, data network 64 is an ATM network. However, persons skilled in the art will appreciate that data network 64 could be replaced by, for example, an Internet Protocol (IP) network, frame relay network, or any other suitable data network. For other types of data networks, the ATM cells referred to in the accompanying description would be replaced by network specific Protocol Data Units (PDU), which could be any one, for example, of cells, frames or packets.

In the embodiment of the present invention where data network 64 is an ATM network, gateway 86 is responsible for packing telecommunication signals received from PBX/Centrex switch 84 into a predetermined data format, e.g. ATM cells, and sending them to data network 64. In this embodiment, gateway 86 also multiplexes these signals to minimize the number of ATM Virtual Channel Connections (VCC) required to transport traffic from the corporate site to the telecommuter or small branch office premises 73. More specifically, the telecommunications signals from PBX/Centrex switch 84 may be one of two formats: (1) line card signal - normally sent on the bus connecting the core part of the telephone switch and the line cards, or (2) loop signal - normally sent on the loop connecting the line card and the telephone set. These two formats will hereinafter be collectively referred to as "line side signals." Line side signals contain speech and call control signals necessary to provide a telecommunications service (such as PBX/Centrex service and/or POTS) at PBX/Centrex switch 84.

As with Figure 2, Digital Subscriber Line Access Multiplexer (DSLAM) 66 integrates the appropriate data format, e.g. ATM, over loop 68. XDSL loop 68 (xDSL is used to refer to any DSL protocol, such as ADSL, VDSL, etc.) is shown connecting DSLAM 66 with Customer Premises Equipment (CPE) 70. Loop 68 could also comprise other forms of access links such as Hybrid Fibre Coax (HFC), and wireless (which would be used with an access-specific multiplexer in the place of DSLAM 66). CPE 70 receives the data signals over xDSL loop 68, reconstitutes the telecommunications signal (line side signal) and routes it to an appropriate voice device, such as digital or analog telephone 80 and fax machine 82.

When the line side signal to be forwarded from PBX/Centrex switch 84 is a line card signal (containing speech and call control signals necessary for implementing a telecommunications service at PBX/Centrex switch 84) it is accessed on a line card bus between PBX/Centrex switch core and the line card in PBX/Centrex switch 84. The line card converts the line card signal to a loop signal, which is sent to the telephone unit (not shown) locally co-located with PBX/Centrex switch 84. All the information required to provide PBX/Centrex services to such telephone unit is contained in the line card signal (and hence the loop signal).

For remote telecommuters receiving PBX/Centrex services in accordance with one aspect of the present invention, PBX/Centrex switch 84 sends the line card signal directly to gateway 86. Gateway 86 packs the line card signal into ATM cells and sends them to data network 64. Gateway 86 also multiplexes the line card signal to minimize the number of ATM Virtual Channel Connections (VCC) required to transport traffic from the corporate site to the telecommuter or small branch office premises 73.

In the embodiment of the present invention where data network 64 is an ATM network, the ATM cells are switched across data network 64, through DSLAM 66, over xDSL loop 68 to be received at telecommuter or small branch office premises 73 through CPE 70. Though an xDSL channel is preferred, xDSL loop 68 could also comprise other forms of access links such as Hybrid Fibre Coax (HFC), and wireless. CPE 70 assembles the line card signal from the received ATM cells and sends them to the line card contained within CPE 70 itself. The line card converts the line card signal to a loop signal, which is transmitted to CPE devices 80, 82. In essence, the line card (which is typically part of the PBX/Centrex switch 84) is remoted from the switch to the CPE 70, with all the PBX/Centrex features (such as dial plan, call transfer, call forwarding, voice mail, voice mail indication, conference calling, speed calling, etc.) preserved. As such, the service reach of a typical PBX/Centrex switch is extended and distributed to locations far beyond the normal loop reach of the switch. Since the speech samples and call control signals originate from the corporate PBX/Centrex switch 84, the telecommuter can use the same telephone set, same dial plan, same call features and same low-cost long-distance charge plan as colleagues working at the corporate office.

CPE devices (in this case voice devices) could be any of telephone 80, fax 82, etc. which are connected to CPE 70. CPE 70, which is co-located with the CPE devices 80, 82 provides an interface between the CPE devices 80, 82 and DSLAM 66. CPE 70 also provides the multiplexing function when multiple CPE devices 80, 82 are used at the telecommuter or small branch office premises 73.

A key difference of remoting the line card signal rather than the loop signal (as was the case with the ISDN telecommuting solution illustrated in Figure 1) is simplicity, in that a conversion from line card to loop signal and back, is eliminated. A line card signal, designed for transmission between short distances, is simpler and less expensive to process. This compares with a loop signal, designed for transmission between long distances (having a higher power level, with built in protection from lightning surges and noise), which is typically complex and more expensive to process.

As well, the approach illustrated in Figure 3A eliminates the use of multiple physical circuits as multiple telephony connections can be carried in multiple time-slots on the link between PBX/Centrex switch 84 and gateway 86, and multiple virtual circuits on the link between gateway 86 and data network 64. As well, to save transmission costs even further, a single virtual circuit can be used to carry multiple voice channels between a single pair of gateway 86 and CPE 70.

For remote telecommuters receiving PBX/Centrex services in accordance with another aspect of the present invention, a line side signal which is a loop signal (containing speech and call control signals for loop transmission) is transmitted from PBX/Centrex switch 84 to gateway 86 where it is decoded and packetized into an appropriate data format such as ATM cells, frame relay packets, and Internet Protocol (IP) packets. The packetized signal is then transmitted to data network 64 and DSLAM 66, where it is received by CPE 70 through access loop 68. CPE 70 recovers the speech and call control signals contained therein and sends them to a line card within CPE 70 itself, thereby providing the PBX/Centrex service to CPE devices 80, 82.

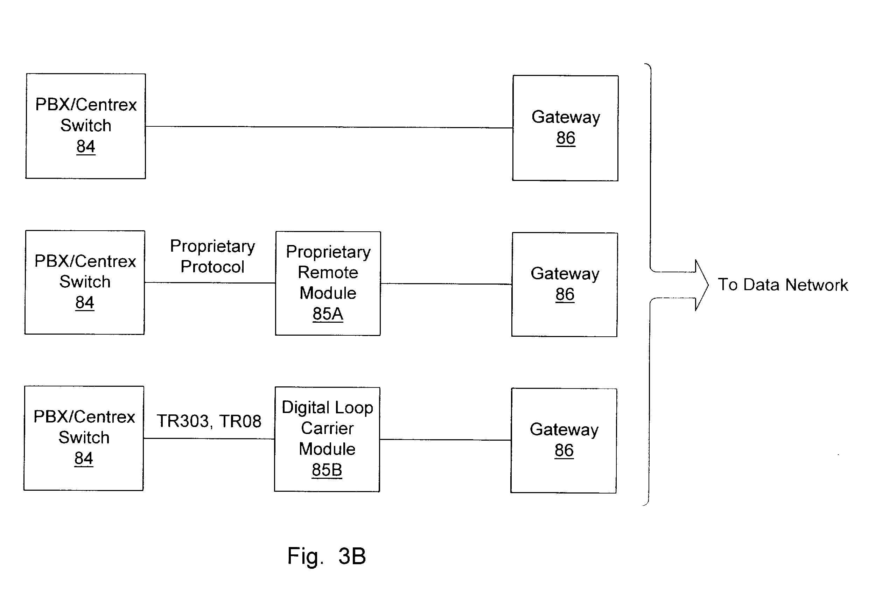

Figure 3B is a schematic diagram of three alternative arrangements for connecting a PBX/Centrex switch and a gateway used in accordance with the present invention. The alternative arrangements are necessary because a PBX/Centrex switch can either wholly reside in a central site, or have remote modules. A remote module can either be proprietary or standardized. An example of a standardized remote module is a Digital Loop Carrier (DLC) module, which communicates with a PBX/Centrex switch using standardized TR303 or TR08 protocols. Though it is an older standard, the objective of TR08 is similar to TR303. Instead of using fibre optic facilities, T1 carrier facilities are used. The feature set of TR08 is not as rich as TR303, and the number of supported voice lines is less than that of TR303.

In a first arrangement (as shown in Figure 3A), there is a direct connection between PBX/Centrex switch 84 and gateway 86. In a second arrangement, a proprietary protocol is used to communicate between PBX/Centrex switch 84 and proprietary remote module 85A (though not shown, proprietary remote module 85A may be integrated with gateway 86). In a third arrangement, either the TR303 protocol or the TR08 protocol is used to communicate between PBX/Centrex switch 84 and DLC module 85B. Gateway 86 can send and receive telecommunication signals, including the speech and call control signals used in accordance with the present invention, from any of PBX/Centrex switch 84, proprietary remote module 85A and DLC module 85B. The different arrangements shown in Figure 3B do not affect the operation of the present invention.

The present invention may also be used by Competitive Local Exchange Carriers (CLEC) to provide residential Plain Old Telephone Service (POTS) to telephone subscribers. The architecture used to provide POTS to telephone subscribers is similar to that employed to provide PBX/Centrex service. The only difference would be that PBX/Centrex switch 84 in Figures 3A and 3B would be replaced by a generic telephone switch offering POTS service (which may in fact be the PBX/Centrex switch 84 shown in Figures 3A and 3B). Speech and call control signals necessary for implementing POTS service at the generic telephone switch would be forwarded to CPE 70 in the same manner as described above with respect to PBX/Centrex service. CPE 70 would recover the speech and call control signals contained therein and provide the POTS service directly on CPE devices 80, 82. Though the various aspects of the present invention described below apply to the POTS case as well, for the purposes of brevity, this document will only refer to the distribution of the PBX/Centrex service.

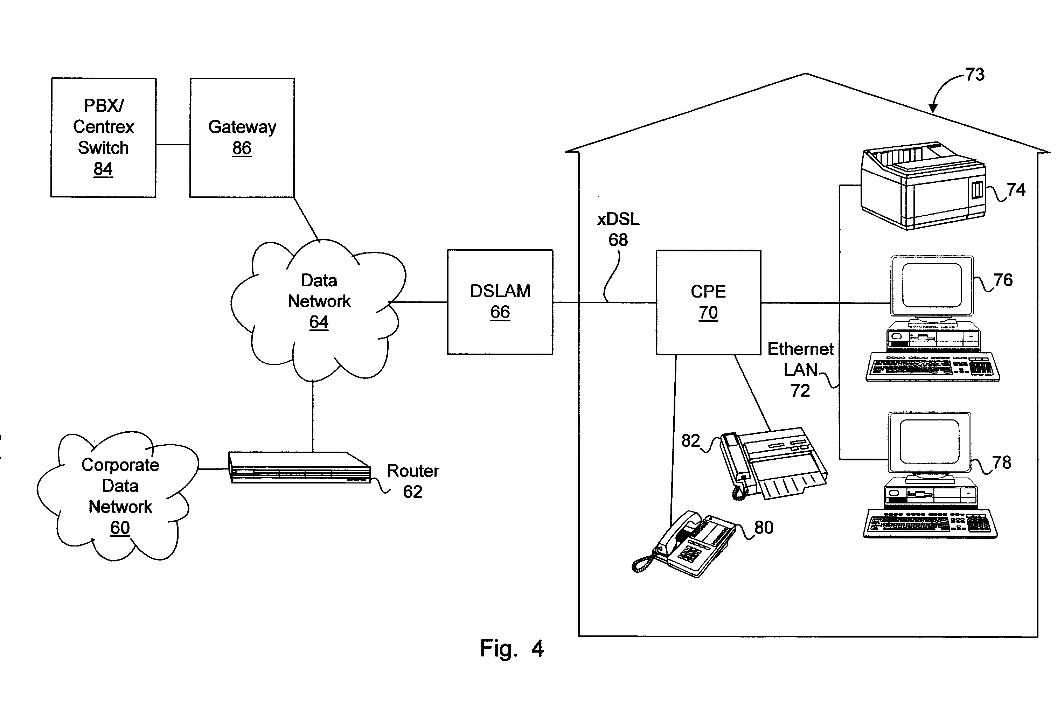

Figure 4 is a schematic diagram of a combination network for distributing data and PBX/Centrex services from a corporate network to a telecommuter or small branch office premises 73. The network shown in Figure 4 is a combination of the network elements shown in Figures 2 and 3A, which is a network designed to provide PBX/Centrex services and high-speed data access to a telecommuter or small branch office premises 73. Thus, in addition to the components shown in Figure 3A, the network of Figure 4 has a router 62 interconnecting the data network 64 to a corporate data network 60. In addition to voice devices telephone 80 and fax machine 82, telecommuter or small branch office premises 73 is also provided with laser printer 74, and computers 76, 78 connected to ethernet LAN 72, which is connected to CPE 70.

Router 62 segments appropriate packets into cells and sends them to data network 64 which switches such cells to DSLAM 66. DSLAM 66 transmits the cells to CPE 70 over xDSL loop 68. CPE 70 (co-located at telecommuter or small branch office premises 73) reassembles the data packets from cells received on xDSL loop 68 and routes them to the appropriate data device connected to Ethernet LAN 72.

For voice services, PBX/Centrex switch 84 sends the line card signal to gateway 86, which packs the line card signal into ATM cells which are sent to data network 64. The ATM cells are switched across the network, through DSLAM 66, over the xDSL loop 68 to be received at telecommuter or small branch office premises 73 by way of CPE 70. CPE 70 assembles the line card signal from the received ATM cells and sends them to the line card contained within the CPE 70 itself. The line card converts the line card signal to a loop signal, which is transmitted to telephone set 80 and/or fax machine 82. As such, all the PBX/Centrex features available to corporate users are preserved.

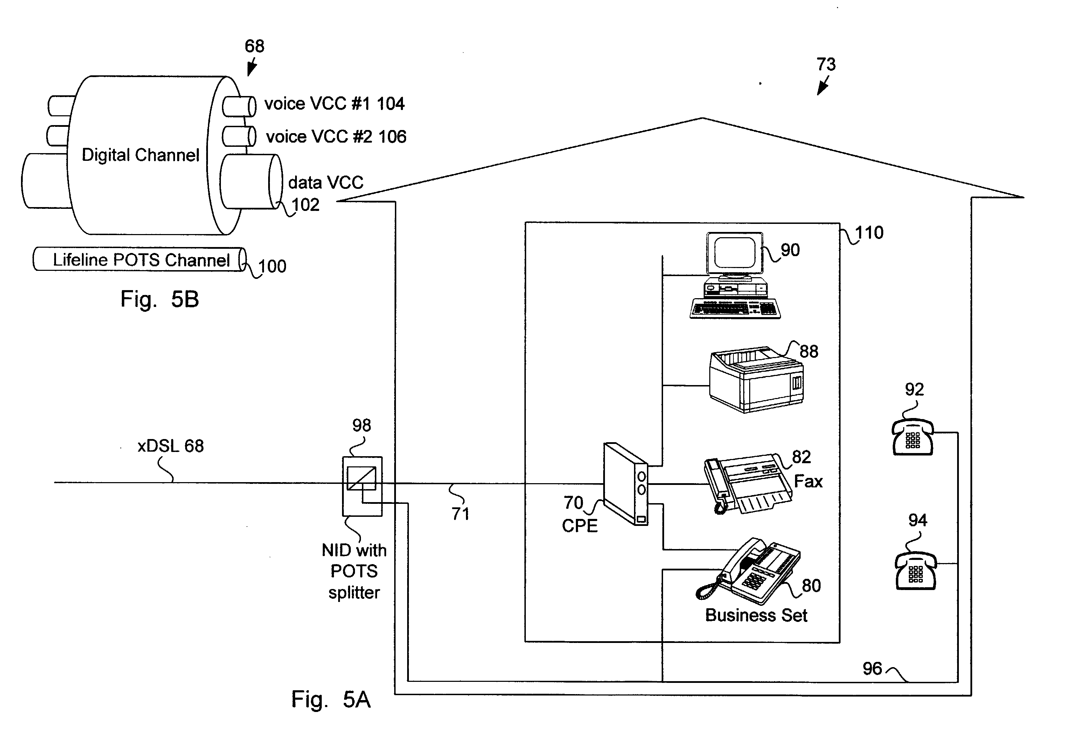

Figure 5A is a schematic diagram of one possible deployment scenario of a home office 110 wired in accordance with the present invention. As shown in Figure 5B, the standard xDSL loop 68 is frequency divided into a lifeline POTS channel 100 and a high-speed digital channel (comprising in this case, data Virtual Channel Connection (VCC) 102, voice VCC #1 104, and voice VCC #2 106). XDSL loop 68 is connected to Network Interface Device (NID) 98 located just outside the telecommuter or small branch office premises 73. NID 98 may contain a Plain Old Telephone System (POTS) splitter for splitting the digital channel (data VCC 102, voice VCC #1 104 and voice VCC #2 106) from the lifeline POTS channel 100. Existing wiring 96 will be used to connect POTS residential telephone sets 92, 94 to the lifeline POTS channel 100.

Typically, new wiring 71 will be required to connect NID 98 to CPE 70 located within home office 110. In other embodiments, a splitter is not required for implementing this invention as current wiring will be sufficient. Connected to CPE 70 would be CPE devices such as computer 90, printer 88, fax 82 and business set 80. Business set 80 may also be connected to lifeline POTS channel 100 through existing wiring 96. Voice VCC #1 104 carries PBX/Centrex services to business set 80. Voice VCC #2 106 carries fax/modem signal traffic to and from fax 82. For further optimization, VCC #1 104 and VCC #2 106 can be combined in one single VCC, as long as they are between the same pair of gateway and CPE.

By carrying 64 kbps Pulse Code Modulation (PCM) samples, toll-quality voice and high-quality voice and fax modem speeds can be achieved. Data connectivity would still be available when both the telephone set 80 and fax machine 82 are in use.

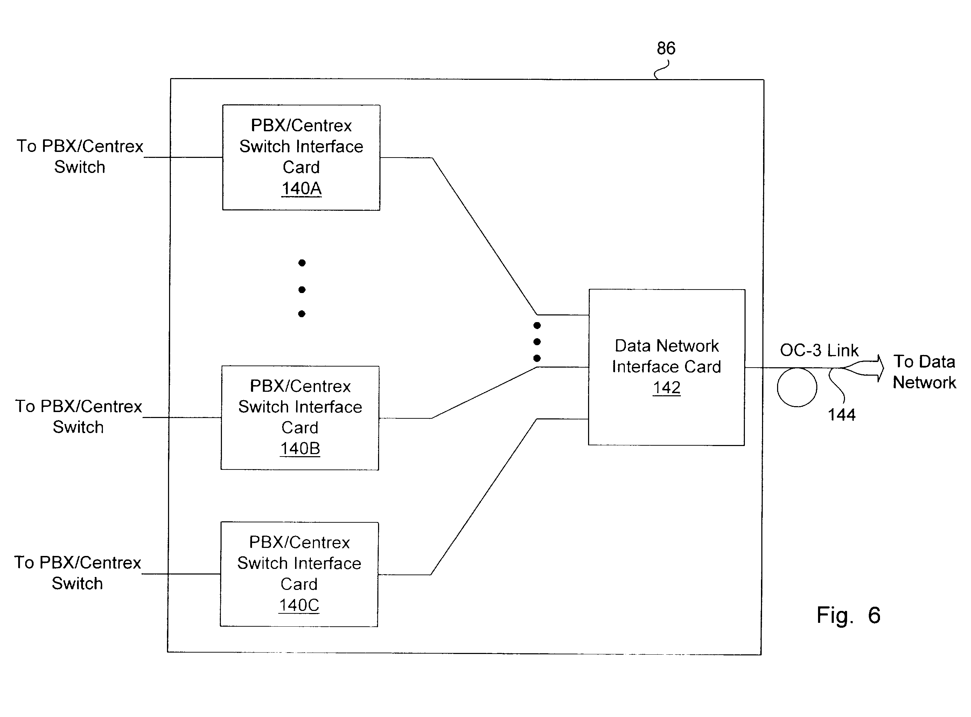

Figure 6 is a schematic diagram of a gateway 86 used in accordance with the present invention. The gateway 86 typically comprises a shelf including cards with two key functional components: i. PBX/Centrex switch (telephone switch) interface card(s) 140A, 140B, 140C, and ii. a data network interface card 142. The PBX/Centrex interface cards 140A, 140B, 140C, are specific to a particular PBX/Centrex switch. Their function is to pack telecommunications signals (speech and call control signals necessary to implement a telecommunications service, such as PBX/Centrex service) received from the PBX/Centrex switch (not shown) into Protocol Data Units (PDUs), such as ATM cells, frame relay frames or IP packets. The PDUs are then forwarded to the data network interface card 142, which is used to multiplex the PDUs received from the PBX/Centrex switch interface cards into a multiplexed PDU stream. The multiplexed PDU stream is then forwarded to data network (not shown), which in one embodiment of the present invention is an ATM network. In the present figure, an OC-3 link 144 is shown, although other facilities such as DS-3 and DS-1 can be used. The OC-3 link will multiplex ATM cells from a plurality of telephony switch interface cards and sends them to the data network (not shown). Typically, one data network interface card is sufficient for one gateway, though a second one can be added for redundancy purposes.

Typically, the format of line side signals is proprietary to telephone switch manufacturers, and the line side signals cannot be packetized by the gateway unless this protocol is ascertained in advance. The hardware and software design of PBX/Centrex switch (telephone switch) interface card(s) 140A, 140B, 140C will vary depending on the format of the line side signals received from PBX/Centrex switch 84. However, persons skilled in the art will appreciate that once this format is ascertained, the design of PBX/Centrex switch (telephone switch) interface card(s) 140A, 140B, 140C will follow principles and practises well known in the art.

Optional functions can also be implemented in gateway 86, including i. operations, administration, maintenance and provisioning; and ii. bandwidth savings schemes such as voice compression, silence suppression and regeneration, as well as fax and modem tone detection (to disable bandwidth savings schemes to allow high speed fax and voice modem signal transmission). While a shelf with different cards is described herein, other packaging methods for gateway 86 are possible without changing the functions performed by the different components contained therein.

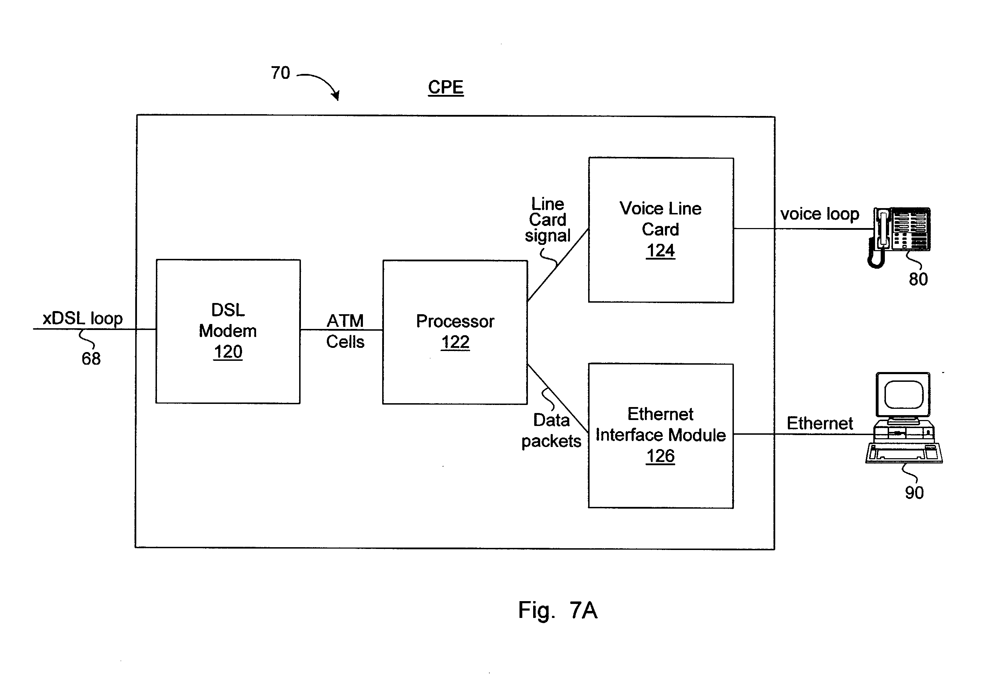

Figure 7A is a schematic diagram of a remote device (Customer Premises Equipment (CPE) device) 70 typically co-located at a telecommuter premises or small branch office. In the receive direction, a DSL modem 120 demodulates the received signal from the xDSL loop 68 and sends the recovered ATM cells to a processor which may be embodied in an application specific integrated circuit (ASIC) 122. The processor 122 demultiplexes the received ATM cells, which contain speech and call control signals necessary to implement PBX/Centrex service. The processor 122 further reconstitutes the received line side signal from the voice ATM cells and sends it to a voice line card 124. As well, the processor recovers the received data packets from the data ATM cells, and sends them to an ethernet interface module 126.

The line side signal is converted by the voice line card 124 into a local loop signal, which is transmitted to telephone set 80. Similarly, data packets, e.g. Internet Protocol (IP) packets, are put into Ethernet frames by ethernet interface module 126, and sent to computer 90. In the transmit direction, the above process is reversed.

Optional functions can also be implemented in CPE 70, including i. operations, administration, maintenance and provisioning; and ii. bandwidth savings schemes such as voice compression, silence suppression and regeneration, as well as fax and modem tone detection (to disable bandwidth savings schemes to allow high speed fax and voice modem signal transmission).

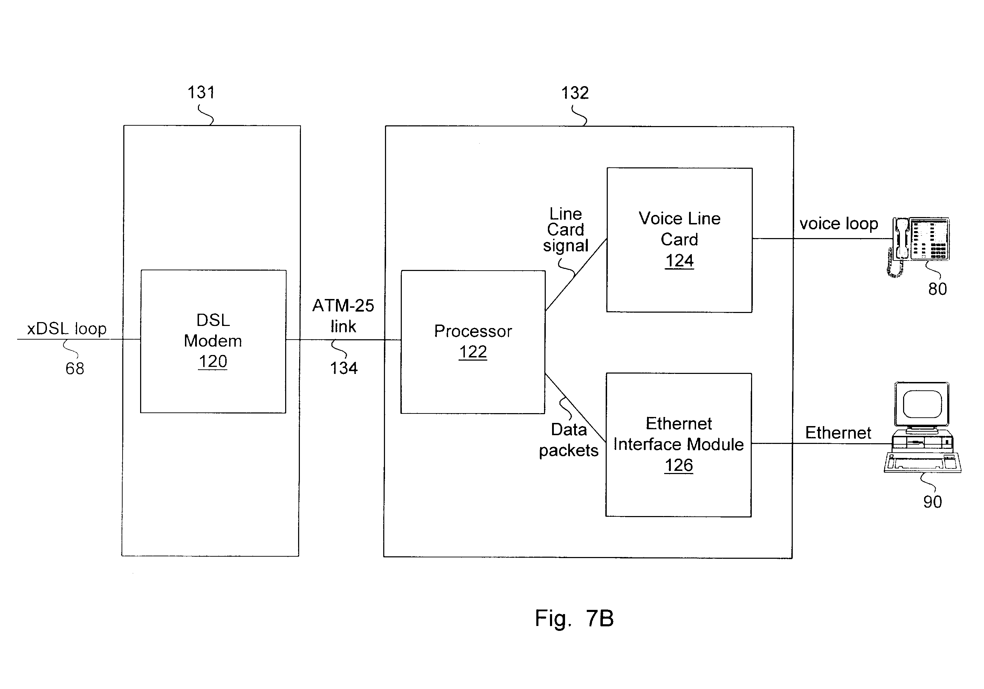

In one embodiment of the present invention, where data network 64 is an ATM network, a similar, but less integrated implementation of the CPE is shown in Figure 7B. The main difference is that DSL Modem 120 (contained within a transmission-specific CPE 131) can be physically separate from an application-specific CPE 132, which contains processor 122, voice line card 124 and ethernet interface module 126. In the implementation shown in Figure 7B, an ATM-25 link 134 is used to carry ATM cells between DSL Modem 120 and processor 122. ATM-25 link is a standard protocol for ATM format in the local area networking. Functionality in the transmit and receive directions between xDSL loop 68, telephone set 80 and computer 90 is otherwise as set out in the description of Figure 7A.

The above description of preferred embodiments should not be interpreted in any limiting manner since variations and refinements can be made without departing from the spirit of the invention. The scope of the invention is defined by the appended claims and their equivalents.

## Claims

1. A system for forwarding, from a first location to a telecommunications device at a second location, a line side signal containing speech and call control signals necessary for providing a telecommunications service at said first location, the system comprising:
a gateway operable to convert the line side signal received from the first location into a formatted telecommunications signal of predetermined data format and transmit the formatted telecommunications signal over a data network; and
a remote device at the second location operable to receive the formatted telecommunications signal from the data network, recover the speech and call control signals contained therein and, using said speech and control signals, provide the telecommunications service to the telecommunications device.

2. The system as claimed in claim 1 wherein said telecommunications service is at least one of PBX/Centrex service and POTS service.

3. The system as claimed in claim 1 or 2 wherein said predetermined data format is at least one of a packetized data format, ATM cells, frame relay frames, and Internet Protocol (IP) packets.

4. The system as claimed in claim 1, 2 or 3 wherein said line side signal is a loop signal.

5. The system as claimed in claim 1, 2 or 3 wherein said line side signal is a line card signal.

6. The system as claimed in claim 1, 2 or 3 wherein said remote device further comprises a line card operable to generate a local loop signal from the formatted telecommunications signal for use by the telecommunications device.

7. The system as claimed in any preceding claim further comprising a multiplexer between the data network and the remote device operable to receive the formatted telecommunications signal from the gateway and transmit the formatted telecommunications signal across an access loop to the remote device.

8. The system as claimed in claim 7 wherein the multiplexer is a digital subscriber line (DSL) access multiplexer (DSLAM) and the access loop is a DSL loop.

9. The system as claimed in claim 8 wherein the remote device further comprises a DSL modem operable to receive DSL signals from the DSL loop.

10. The system as claimed in any preceding claim wherein the remote device is further operable to separate the formatted telecommunications signal from other data signals received from the data network, and to provide the other data signals to a data device connected to said remote device.

11. The system as claimed in any preceding claim further comprising a module between the first location and the gateway operable to receive the line side signal from the first location and transmit the line side signal to the gateway.

12. The system of claim 11 wherein the module is a digital loop carrier module.

13. The system as claimed in claim 11 or 12 wherein the line side signal received by the module is in one of TR303 and TR08 format.

14. The system as claimed in any preceding claim wherein the remote device comprises a modem for receiving the formatted telecommunications signal of predetermined data format, a processor connected to said modem for recovering said speech and call control signals from said formatted telecommunications signal and for utilizing said speech and call control signals to provide said telecommunications service to a telecommunications device connected thereto.

15. The system as claimed in any preceding claim further comprising a router, said router being connected to said data network for routing data destined for said remote device at the second location.

16. The system as claimed in any preceding claim wherein the gateway comprises at least one telephone switch interface card for converting the line side signal received from the first location into a formatted telecommunications signal of predetermined data format, and at least one data network interface card connected to said at least one telephone switch interface card for transmitting said formatted telecommunications signal of predetermined data format to the data network.

17. A gateway for formatting a telecommunication signal into a predetermined data format comprising:
at least one telephone switch interface card for converting a line side signal received from a telephone switch necessary for implementing a telecommunications service at said telephone switch into a formatted telecommunications signal of predetermined data format, and
at least one data network interface card connected to said at least one telephone switch interface card for transmitting said formatted telecommunications signal of predetermined data format to a data network.

18. A remote device for receiving and recovering speech and call control signals from a formatted telecommunications signal comprising:
a modem for receiving from a data network a formatted telecommunications signal of predetermined data format containing speech and call control signals necessary for implementing a telecommunications service,
a processor connected to said modem for recovering said speech and call control signals from said formatted telecommunications signal and for utilizing said speech and call control signals to provide said telecommunications service to a telecommunications device connected thereto.

19. A method for distributing a line side signal containing speech and call control signals necessary for providing a telecommunications service at a first location to a telecommunications device at a second location, the method comprising the steps of:
converting the line side signal received from the first location into a formatted telecommunications signal of predetermined data format;
transmitting the formatted telecommunications signal over a data network;
receiving the formatted telecommunications signal from the data network;
recovering the speech and call control signals contained therein; and,
providing the telecommunications service to the telecommunications device.

20. The method as claimed in claim 19 wherein said telecommunications service is at least one of PBX/Centrex service and POTS service.

21. The method as claimed in claim 19 or 20 wherein said
predetermined data format is at least one of a packetized data format, ATM cells, frame relay frames, and Internet Protocol (IP) packets.

22. A telecommunications network including a gateway at a first location operable to convert a line side signal into a formatted telecommunications signal of predetermined data format and transmit the formatted telecommunications signal over a data network; and
a remote device at a second location operable to receive the formatted telecommunications signal from the data network, recover speech and call control signals contained therein and, using said speech and control signals, provide telecommunications service to the telecommunications device.
